# EUROPEAN PATENT SPECIFICATION

(11) **EP 2 659 571 B1**
(45) Date of publication and mention of the grant of the patent: **10.09.2014**
(21) Application number: 11799097.8
(22) Date of filing: 20.12.2011
(51) Int. Cl.: H02K 1/27, H02K 5/12, H02K 15/12

(54) **A ROTOR FOR A PERMANENT MAGNET SYNCHRONOUS MOTOR**
ROTOR FÜR EINEN SYNCHRONMOTOR MIT PERMANENTMAGNETEN
ROTOR POUR MOTEUR SYNCHRONE À AIMANT PERMANENT

(30) Priority: 29.12.2010 TR 201011102
(43) Date of publication of application: 06.11.2013
(73) Proprietor: Arçelik Anonim Sirketi, 34950 Istanbul (TR)
(72) Inventor: SONMEZ, Emin Gultekin, 34950 Istanbul (TR); IMAT, Yakup, 34950 Istanbul (TR); EKIN, Cihad, 34950 Istanbul (TR); FIRAT, Asuman, 34950 Istanbul (TR)
(86) International application number: PCT/EP2011/073351
(87) International publication number: WO 2012/089554

(56) References cited:
- EP-A1- 1 841 041
- US-A1- 2009 224 620

## Description

The present invention relates to the rotor of an electric motor which operates the pumps of household devices such as dishwasher, washing machine.

The permanent magnet synchronous motors are used for operating the circulation or discharge pumps in household appliances such as dishwasher or washing machine. The electric motors used in pumps can operate in water or humid environments and for preventing the said electric motors from corroding by providing leak-proofing, the rotor core and the magnets placed thereon are coated with plastic material. In the permanent magnet electric motors mounted to the rotor surface, magnet holders are used which provide the magnets to be placed around the rotor core at equal intervals and which have support arms that extend between the magnets. In the rotors leak-proofing against water of which is provided by coating plastic injection thereon, the insulating layer that is injected onto the rotor fixes the positions of the magnets on the rotor surface together with the magnet holders and prevents the magnets from detaching from the rotor surface. Since the magnets are concealed by being coated in the plastic injection process, the positions of the magnets cannot be detected in the magnetization process, which is the next phase in production, and the rotor cannot be placed into the magnetization apparatus appropriately for the positions of the magnets.

US 2009/224620 discloses a rotor for a permanent magnet synchronous motor according to the preamble of claim 1.

In the European Patent Application No EP1841041, a rotor over which plastic injection is coated in order to increase the resistance thereof against water and the production method thereof are explained.

In the Japanese Patent No JP58195461, the production method of a permanent magnet rotor, which comprises magnet holder rings, is explained.

The aim of the present invention is the realization of a rotor which is used in the electric motor that operates the pumps of household appliances such as dishwasher or washing machine, which is coated with plastic injection and the production time of which is reduced.

The rotor realized in order to attain the aim of the present invention, explicated in the first claim and the respective claims thereof, is used in the electric motors which operate the circulation or water discharge pumps of household appliances such as dishwasher and washing machine.

Magnets are placed successively at equal intervals on the outer surface of the rotor core, magnet holders are mounted to the front and rear surface of the rotor core for fixing the positions of the magnets and the insulating layer is coated on the magnets and the magnet holders by injecting plastic material onto the rotor.

Each magnet holder has a base that seats onto the core, support arms that extend between the magnets and support projections that prevent the magnets from moving in the axial direction.

More than one positioning pin, that is arranged circularly at equal intervals at the periphery of the outer surface of the magnet holder that is coated with the insulating layer, that extends outwardly from the rear surface of the base vertically to the base and that indicates the positions of the magnets, are disposed on the base of the magnet holder. The positioning pins extend in the axial direction backwards from the rear surfaces of the support projections at the level of the middle points of the front or rear surfaces of the magnets whereon the support projections seat.

After the plastic injection process, the ends of the positioning pins extend outside the insulating layer that coats the magnets and the magnet holders and each positioning pin indicates the position of a magnet.

The rotor furthermore comprises two channels, which extend inside the core and provide the injected plastic material to form a bridge from one magnet holder to the other, and two slots, which are disposed in each magnet holder and correspond to the front of the channels.

The rotor furthermore comprises two centering pins disposed on each magnet holder and centering holes disposed on the rotor core and through which the centering pins pass.

In the rotor of the present invention, the positioning pins disposed in the plastic magnet holders provide ease of production in the plastic injection and magnetization processes.

The rotor realized in order to attain the aim of the present invention is illustrated in the attached figures, where:

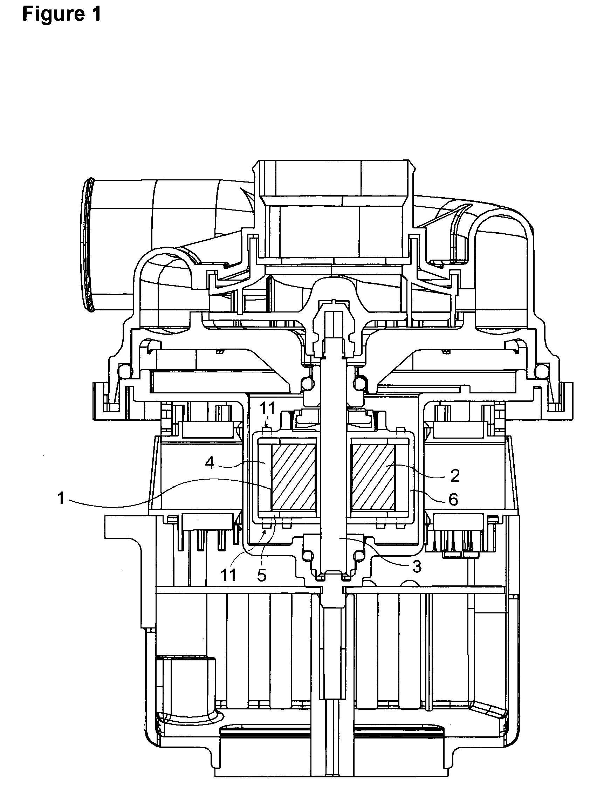

Figure 1 - is the cross-sectional view of a pump and the rotor disposed in the motor that operates the pump.
Figure 2 - is the exploded view of a rotor.
Figure 3 - is the perspective view of a rotor in grouped state.
Figure 4 - is the perspective view of a magnet holder.
Figure 5 - is the perspective view of a rotor over which plastic insulating layer is coated.
Figure 6 - is the schematic view of the rotor placed into a magnetization apparatus.

The elements illustrated in the figures are numbered as follows:
1. Rotor
2. Core
3. Motor shaft
4. Magnet
5. Magnet holder
6. Insulating layer
7. Base
8. Shaft hole
9. Support arm
10. Support projection
11. Positioning pin
12. Channel
13. Slot
14. Centering pin
15. Centering hole

The rotor (1), suitable for using in the electric motors that operate the circulation or discharge pumps of the household devices such as dishwasher or washing machine, comprises a core (2) composed of magnetic steel laminations stacked one on the top of the other, a motor shaft (3) mounted to the middle of the core (2), more than one magnet (4) which is successively placed all around the outer surface of the core (2), one or more than one magnet holder (5) produced from plastic material, mounted to the front and/or rear surface of the core (2), providing the magnets (4) to be placed on the surface of the core (2) at equal intervals and the fixing of the positions of the magnets (4) in the axial direction, and an insulating layer (6) produced by the injection of plastic material on the rotor (1) by the injection molding method, which coats the outer surfaces of the magnets (4) and the magnet holders (5) and which provides leak-proofing against water.

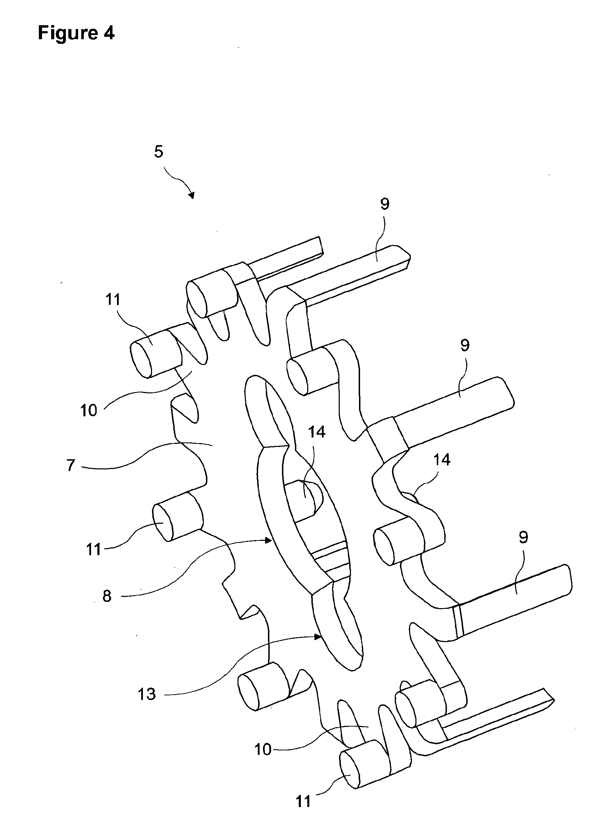

The magnet holder (5) comprises a base (7) that seats onto the planar front and/or rear surface of the core (2), a shaft hole (8) disposed at the middle of the base (7), more than one support arm (9) arranged along the periphery of the base (7), extending between the magnets (4) in the axial direction vertically to the base (7), and more than one support projection (10) disposed between the support arms (9), around the base (7), extending outwardly from the base (7) in the radial direction and which prevents the magnets (4) from moving in the axial direction by bearing against the front or rear surfaces of the magnets (4) (Figure 4).

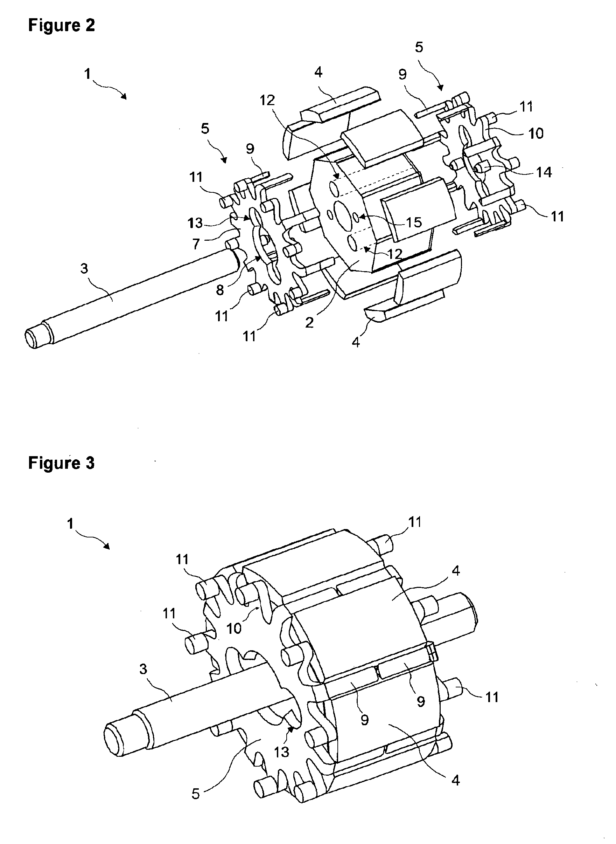

The rotor (1) of the present invention comprises more than one positioning pin (11) disposed on the magnet holder (5), arranged circularly on the base (7) at equal intervals, extending outwardly from the rear surface of the base (7) vertically to the base (7) and in the opposite direction to the support arms (9) and which indicates the positions of the magnets (4) (Figure 2, Figure 3, Figure 4).

The positioning pins (11) extend in the axial direction backwards from the rear surfaces of the support projections (10) at the level of the middle points of the front or rear surfaces of the magnets (4) that the support projections (10) contact (Figure 3).

By means of the support arms (9), the magnet holder (5) provides the magnets (4) to be positioned on the core (2) surface at equal intervals and prevents the magnets (4) from moving in the radial direction, moreover, by means of the support projections (10), fixes the positions of the magnets (4) in the axial direction on the core (2) surface. After the magnets (4) and the magnet holders (5) are mounted, the core (2) is placed into an injection mould and the positioning pins (11) are used for placing the rotor (1) into the injection mould in the right position.

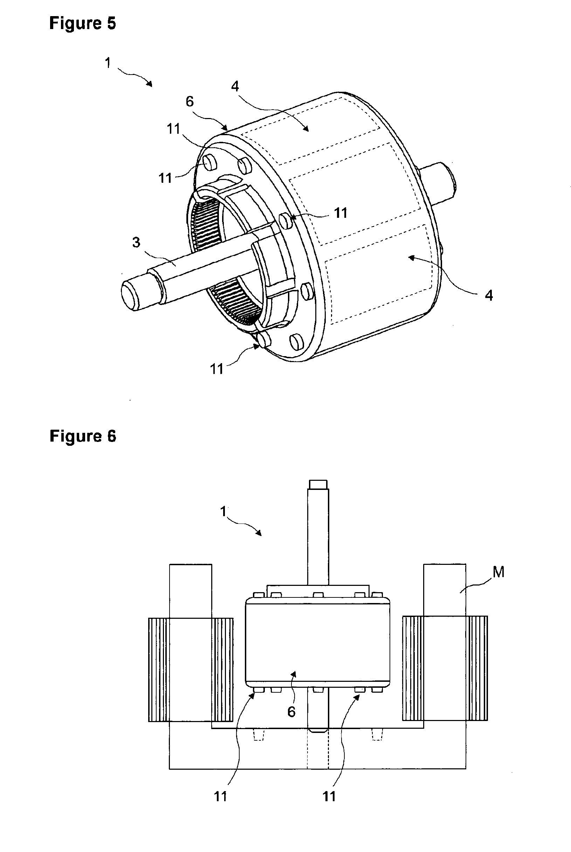

In an embodiment of the present invention, after the plastic injection process, the ends of the positioning pins (11) disposed in the rotor (1) extend outside the insulating layer (6) that coats the magnets (4) and the magnet holders (5), thus function as an indicator that indicates the positions of the magnets (4) that are concealed by remaining under the insulating layer (6) (Figure 5). In the magnetization process after the plastic injection process, the positioning pins (11) provide the rotor (1) to be placed into the magnetization apparatus (M) appropriately for the positions of the magnets (4) (Figure 6).

In another embodiment of the present invention, the rotor (1) comprises two identical magnet holders (5) the support arms (9) of which extend towards each other from between the magnets (4) (Figure 2), and the positioning pins (11) extend outwardly from the front and rear surface of the insulating layer (6) that is coated on the rotor (1). The positioning pins (11) that extend bidirectionally in the rotor (1) provide advantage in the plastic injection and magnetization processes.

In another embodiment of the present invention, the rotor (1) comprises more than one channel (12), which extends inside the core (2), between the front and rear surfaces of the core (2) and provides the plastic material that forms the insulating layer (6) to form a bridge between the magnet holders (5), which are disposed on the front and rear surface of the core (2), by passing through the core (2) during the injection process, and more than one slot (13) disposed on the base (7) of the magnet holders (5), around the shaft hole (8), corresponding to the front of the channels (12) and which provides the entry of the plastic material that forms the insulating layer (6) into the channels (12) (Figure 2, Figure 3, Figure 4).

In another embodiment of the present invention, the rotor (1) comprises more than one centering pin (14), disposed on the magnet holder (5) and which provides the magnet holder (5) to be placed on the front and/or rear surface of the core (2) concentrically and more than one centering hole (15) disposed on the front and/or rear surface of the core (2) and through which the centering pins (14) pass (Figure 2, Figure 4).

During the production of the rotor (1) of the present invention, the positioning pins (11), which are produced as one piece with the plastic magnet holder (5), provide the rotor (1) to be placed in the right position into the plastic injection mould and also into the magnetization apparatus (M) in the magnetization process performed after the plastic injection, and losses in time are prevented in both phases of production.

It is to be understood that the present invention is not limited by the embodiments disclosed above and a person skilled in the art can easily introduce different embodiments. These should be considered within the scope of the protection postulated by the claims of the present invention.

## Claims

1. A rotor (1) suitable for using in the electric motors that operate the circulation or discharge pumps of household devices, comprising
- a core (2),
- more than one magnet (4) which is successively placed all around the outer surface of the core (2),
- one or more than one magnet holder (5) produced from plastic material, mounted to the front and/or rear surface of the core (2) and which has a base (7), more than one support arm (9) extending between the magnets (4) in the axial direction from the base (7), and more than one support projection (10) disposed between the support arms (9), around the base (7), extending outwardly from the base (7) in the radial direction and which bears against the front or rear surface of the magnets (4), **characterized by**
- an insulating layer (6) produced by the injection of plastic material and which coats the outer surfaces of the magnets (4) and the magnet holders (5), and
- more than one positioning pin (11) disposed on the magnet holder (5), arranged circularly on the base (7) at equal intervals, extending outwardly from the rear surface of the base (7) vertically to the base (7) and in the opposite direction to the support arms (9) and which indicates the positions of the magnets (4).

2. A rotor (1) as in Claim 1, **characterized by** the positioning pins (11) that extend in the axial direction backwards from the rear surfaces of the support projections (10) at the level of the middle points of the front or rear surfaces of the magnets (4) that the support projections (10) contact.

3. A rotor (1) as in Claim 1 or 2, **characterized by** the positioning pins (11) the ends of which extend outside the insulating layer (6) that coats the magnets (4) and the magnet holders (5).

4. A rotor (1) as in any one of the above claims, **characterized by** two identical magnet holders (5) the support arms (9) of which extend towards each other from between the magnets (4).

5. A rotor (1) as in Claim 4, **characterized by** more than one channel (12) which extends inside the core (2), between the front and rear surface of the core (2) and provides the plastic material that forms the insulating layer (6) to form a bridge between the magnet holders (5).

6. A rotor (1) as in Claim 5, **characterized by** more than one slot (13) disposed on the base (7) of the magnet holders (5), corresponding to the front of the channels (12) and which provides the entry of the plastic material that forms the insulating layer (6) into the channels (12).

7. A rotor (1) as in any one of the above claims, **characterized by** more than one centering pin (14), disposed on the magnet holder (5) and more than one centering hole (15) disposed on the front and/or rear surface of the core (2) and through which the centering pins (14) pass.

## Patentansprüche

1. Rotor (1), der zur Benutzung in Elektromotoren geeignet ist, die die Zirkulations- oder Förderpumpen von Haushaltsgeräten antreiben, umfassend
- einen Kern (2)
- mehrere Magnete (4), die aufeinander folgenden um die gesamte Außenfläche des Kerns (2) herum angeordnet sind,
- einen oder mehrere Magnethalter (5), die aus Kunststoffmaterial hergestellt sind und an der Vorder- und/oder Rückseitenfläche des Kerns (2) angebracht sind und eine Basis (7), mehrere Tragearme (9), die sich zwischen den Magneten (4) in Axialrichtung von der Basis (7) erstrecken, und mehrere Tragevorsprünge (10), die zwischen den Tragearmen (9) um die Basis (7) herum angeordnet sind und sich von der Basis (7) in Radialrichtung nach außen erstrecken und an der Vorder- oder Rückseitenfläche der Magnete (4) anliegen, aufweisen, und
- eine Isolationsschicht (6), die durch das Einspritzen von Kunststoffmaterial hergestellt ist und die Außenflächen der Magnete (4) und der Magnethalter (5) bedeckt, **gekennzeichnet durch** mehrere Positionierungsstifte (11), die am Magnethalter (5) angeordnet sind und kreisförmig in gleichen Abständen an der Basis (7) angeordnet sind und sich von der Rückseitenfläche der Basis (7) vertikal zur Basis (7) und in entgegengesetzter Richtung zu den Tragearmen (9) nach außen erstrecken und die Positionen der Magnete (4) angeben.

2. Rotor (1) nach Anspruch 1, **dadurch gekennzeichnet, dass** sich die Positionierungsstifte (11) von den Rückseitenflächen der Tragevorsprünge (10) auf der Höhe der Mittelpunkte der Vorder- oder Rückseitenfläche der Magnete (4), mit denen die Tragevorsprünge (10) in Kontakt stehen, in Axialrichtung nach hinten erstrecken.

3. Rotor (1) nach Anspruch 1 oder 2, **dadurch gekennzeichnet, dass** sich die Enden der Positionierungsstifte (11) aus der Isolationsschicht (6) heraus erstrecken, die die Magnete (4) und die Magnethalter (5) bedeckt.

4. Rotor (1) nach einem der vorangehenden Ansprüche, **gekennzeichnet durch** zwei identische Magnethalter (5), deren Tragearme (9) sich von einer Position zwischen den Magneten (4) zueinander hin erstrecken.

5. Rotor (1) nach Anspruch 4, **gekennzeichnet durch** mehrere Kanäle (12), die sich zwischen der Vorder- und Rückseitenfläche des Kerns (2) in den Kern (2) hinein erstrecken und dafür sorgen, dass die Isolationsschicht (6) eine Brücke zwischen den Magnethaltern (5) bildet.

6. Rotor (1) nach Anspruch 5, **gekennzeichnet durch** mehrere Schlitze (13), die an der Basis (7) der Magnethalter (5) angeordnet sind und mit der Vorderseite der Kanäle (12) übereinstimmen und das Eindringen des Kunststoffmaterials, das die Isolationsschicht (6) bildet, in die Kanäle (12) ermöglichen.

7. Rotor (1) nach einem der vorangehenden Ansprüche, **gekennzeichnet durch** mehrere Zentrierungsstifte (14), die am Magnethalter (5) angeordnet sind, und mehrere Zentrierungsbohrungen (15), die an der Vorder- und/oder Rückseitenfläche des Kerns (2) angeordnet sind und **durch** die die Zentrierungsstifte (14) treten.

## Revendications

1. Un rotor (1) adapté à être utilisé dans les moteurs électriques qui actionnent les pompes de circulation et de décharge des électroménagers, comprenant
- un noyau (2),
- plus d'un aimant (4) placé successivement tout autour de la surface extérieure du noyau (2),
- un ou plus d'un porte-aimant (5) qui est produit de plastique, qui est monté à la surface avant et/ou arrière du noyau (2) et qui a une base (7), plus d'un bras de support (9) s'étendant à partir de la base (7) parmi les aimants (4) dans la direction axiale et plus d'une protubérance de support (10) qui est disposée parmi les bras de support (9) et autour de la base (7), qui s'étend à partir de la base (7) vers l'extérieur dans la direction radiale et qui s'appuie sur la surface avant ou arrière des aimants (4) et
- une couche isolante (6) qui est produit par l'injection d'un matériau plastique et qui recouvre les surfaces extérieure des aimants (4) et des porte-aimant (5),
**caractérisé par** plus d'une goupille de positionnement (11) qui est disposée sur le porte-aimant (5), qui est arrangée da manière circulaire sur la base (7) à des intervalles égaux, qui s'étend vers l'extérieur à partir de la surface arrière de la base (7) de manière perpendiculaire à la base (7) et dans la direction opposée aux bras de support (9), et qui indique les positions des aimants (4).

2. Un rotor (1) selon la Revendication 1, **caractérisé par** les goupilles de positionnement (11) qui s'étendent dans la direction axiale vers l'arrière à partir des surfaces arrières des protubérances de support (10) au niveau des points intermédiaires des surfaces avant ou arrière des aimants (4) que les protubérances de support (10) touchent.

3. Un rotor (1) selon la Revendication 1 ou 2, **caractérisé par** les goupilles de positionnement (11) dont les extrémités s'étendent à l'extérieur de la couche isolante (6) qui recouvre les aimants (4) et les porte-aimant (5).

4. Un rotor (1) selon l'une quelconque des revendications précédentes, **caractérisé par** deux porte-aimant identiques (5) dont les bras de support (9) s'étendent l'un vers l'autre parmi les aimants (4).

5. Un rotor (1) selon la Revendication 4, **caractérisé par** plus d'un canal (12) qui s'étend dans le noyau (2) et entre la surface avant et arrière du noyau (2) et qui assure que le matériau plastique formant la couche isolante (6) forme un pont parmi les porte-aimant (5).

6. Un rotor (1) selon la Revendication 5, **caractérisé par** plus d'une fente (13) qui est située sur la base (7) des porte-aimant (5), alignée avec l'avant des canaux (12) et qui permet l'entrée du matériau plastique formant la couche isolante (6) dans les canaux (12).

7. Un rotor (1) selon l'une quelconque des revendications précédentes, **caractérisé par** plus d'une goupille de centrage (14) qui est disposée sur le porte-aimant (5) et par plus d'un trou de centrage (15) qui est disposé sur la surface avant et/ou arrière du noyau (2) et à travers lequel les goupilles de centrage (14) passent.
